(19) Europäisches Patentamt / European Patent Office / Office européen des brevets

(11) **EP 3 332 961 B1**

(12) **EUROPEAN PATENT SPECIFICATION**

(45) Date of publication and mention of the grant of the patent:
**19.02.2020  Bulletin 2020/08**

(21) Application number: **16832985.2**

(22) Date of filing: **01.08.2016**

(51) Int Cl.:
*B32B 27/32* *(2006.01)*          *B29C 55/12* *(2006.01)*
*B32B 15/085* *(2006.01)*        *B32B 27/00* *(2006.01)*
*H01G 4/18* *(2006.01)*           *B29K 23/00* *(2006.01)*
*B29K 45/00* *(2006.01)*         *B29L 9/00* *(2006.01)*
*B32B 15/08* *(2006.01)*          *B32B 27/08* *(2006.01)*
*B32B 27/30* *(2006.01)*

(86) International application number:
**PCT/JP2016/072486**

(87) International publication number:
**WO 2017/022706 (09.02.2017 Gazette 2017/06)**

(54) **OLEFIN MULTILAYER FILM AND FILM CAPACITOR**

OLEFIN-MEHRSCHICHTFOLIE UND FOLIENKONDENSATOR

FILM MULTICOUCHE D'OLÉFINE ET CONDENSATEUR À FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.08.2015   JP 2015153118**

(43) Date of publication of application:
**13.06.2018   Bulletin 2018/24**

(73) Proprietor: **Toray Industries, Inc.**
**Tokyo 103-8666 (JP)**

(72) Inventors:
• **IMANISHI, Yasuyuki**
**Otsu-shi**
**Shiga 520-8558 (JP)**
• **OHKURA, Masatoshi**
**Otsu-shi**
**Shiga 520-8558 (JP)**

• **OKADA, Kazuma**
**Otsu-shi**
**Shiga 520-8558 (JP)**

(74) Representative: **Hoefer & Partner Patentanwälte mbB**
**Pilgersheimer Straße 20**
**81543 München (DE)**

(56) References cited:
| EP-A1- 2 701 165 | EP-A1- 2 749 587 |
| EP-A1- 2 832 776 | EP-A1- 3 168 259 |
| WO-A1-2009/060944 | WO-A1-2012/099167 |
| WO-A1-2014/061403 | JP-A- H09 148 176 |
| JP-A- 2000 208 360 | JP-A- 2007 290 380 |
| JP-A- 2015 012 076 | JP-A- 2015 016 569 |
| JP-B1- 5 660 261 | |

**Description**

TECHNICAL FIELD

The present invention relates to an olefin multilayer film suitable for packaging and industrial applications. More specifically, the present invention relates to an olefin multilayer film which has processing suitability in the production of a capacitor element, and exhibits excellent withstand voltage at high temperatures and excellent reliability in applications to capacitors for high voltage use, and has elongation at break as well as dimensional stability and insulating properties in a high temperature range, the properties being suitable for applications to capacitors and a method for producing the olefin multilayer film.

BACKGROUND ART

Recently, inverters are introduced into most of electric facilities, and it is increasingly required to downsize capacitors as well as increase the capacitance of capacitors. In view of such a requirement, particularly in automobile applications (including hybrid car applications), solar power generation, and wind power generation, it is becoming essential to improve the withstand voltage of a film, and to further reduce the film thickness and improve the heat resistance of the film while maintaining the productivity of the film and the processing suitability in the production of a capacitor element. As for the heat resistance, capacitors are required to be usable in a high-temperature environment exceeding 120°C because the temperature of the usage environment is high in power semiconductor applications in which SiC is used. As described in Non-Patent Document 1, however, the upper limit of the operating temperature of a capacitor including a polypropylene film is said to be about 110°C, and it is becoming extremely difficult to stably maintain the withstand voltage in such a high-temperature environment.

In order to downsize a film capacitor and improve the heat resistance of the film capacitor, it is conceivable to use a thin film having a high relative permittivity, and to use a film having a glass transition temperature exceeding the temperature range of the usage environment of the capacitor. For example, there has been proposed a laminate having a multilayer structure including two kinds of films having different relative permittivities that are alternately overlaid, one film being made from a cycloolefin polymer having a glass transition temperature exceeding 130°C and the other film being a polypropylene film, and capable of maintaining a large electrostatic capacitance while having heat resistance and withstand voltage (for example, Patent Document 1). The film of Patent Document 1, however, is hardly sufficient in the performance and reliability in a capacitor for the following reasons: since the film is not obtained by coextrusion lamination but is a laminate obtained by forming a cycloolefin polymer layer by a coating method on a polypropylene film as a base, interlayer delamination of the film occurs in a high-temperature usage environment; since the film contains a polypropylene resin low in stereoregularity, the film is insufficient in withstand voltage; and since the film is unstretched, the film is insufficient in mechanical properties, especially elongation at break, and is easily broken during processing into a capacitor element. Meanwhile, there has been proposed a rigid film obtained by coextruding and stretching a cycloolefin polymer and a polypropylene (for example, Patent Document 2). The film of Patent Document 2, however, is hardly sufficient in the performance and reliability in a capacitor since the film is not subjected to heat treatment after the stretching, does not have dimensional stability in a high-temperature environment, and is insufficient in withstand voltage.

PRIOR ART DOCUMENTS

PATENT DOCUMENTS

   Patent Document 1: Japanese Patent Laid-open Publication No. 2015-012076
   Patent Document 2: Japanese Patent Laid-open Publication No. 06-336526

NON-PATENT DOCUMENT

Non-Patent Document 1: Nikkei Electronics, September 17, 2012, pp. 57-62

## SUMMARY OF THE INVENTION

### PROBLEMS TO BE SOLVED BY THE INVENTION

The present inventors made earnest investigations to solve the above-mentioned problems, and consequently completed the present invention. The present invention provides an olefin multilayer film which has processing suitability in the production of a capacitor element, and exhibits excellent withstand voltage at high temperatures and excellent reliability in applications to capacitors for high voltage use, and has elongation at break as well as dimensional stability and insulating properties in a high temperature range, which are suitable for applications to capacitors.

### SOLUTIONS TO THE PROBLEMS

The above-mentioned object can be achieved by an olefin multilayer biaxially stretched film, comprising a base layer unit containing a cyclic olefin resin, and a constituent layer containing a polypropylene resin laminated on both surfaces of the base layer unit, having a dielectric breakdown voltage at 135°C, of 280 V/pm or more, Wherein the polypropylene resin has a meso-pentad fraction of 0.95 or more and a melting point higher than 160°C. and wherein the thickness of the film is in the range of 0.5 um or more and less than 15 um.

### EFFECTS OF THE INVENTION

According to the present invention, it is possible to provide an olefin multilayer film having elongation at break as well as dimensional stability and insulating properties in a high temperature range that are suitable for applications to capacitors. As a result, the olefin multilayer film can be used in various applications including packaging applications, tape applications, and electric applications such as cable wrapping and capacitors, and can exhibit withstand voltage at high temperatures and reliability especially in applications to capacitors for high voltage use.

### BRIEF DESCRIPTION OF THE DRAWING

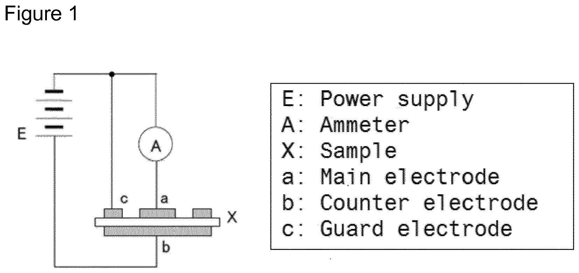

Fig. 1 is a schematic diagram showing a volume resistance measuring circuit.

### EMBODIMENTS OF THE INVENTION

It is important that the olefin multilayer film of the present invention be an olefin multilayer film including a base layer unit containing a cyclic olefin resin, and a constituent layer containing a polypropylene resin provided on at least one surface of the base layer unit. Through earnest investigations, the inventors have found that the multilayer film is capable of exhibiting an action that the cyclic olefin resin in the base layer unit is responsible for the high heat resistance and dimensional stability in a high-temperature environment, and the constituent layer containing the polypropylene resin provided on at least one surface of the base layer unit is responsible for the processing suitability in the production of a capacitor element and high withstand voltage performance required of a capacitor.

The method for producing the olefin multilayer film of the present invention through lamination may be a feedblock method or a multi-manifold method by coextrusion, a method by coating. From the viewpoint of production efficiency and cost, a lamination method by coextrusion (for example, melt coextrusion) is preferable. Further, the multilayer film preferably has a structure including two or more layers in the film thickness direction, more specifically, a structure including two or more layers in which at least one surface layer is a layer A. For example, the multilayer film may have a two-layer structure of layer A/layer B, more preferably a three-layer structure of layer A/layer B/layer A, or a structure including four or more layers with the layer A serving as the outermost layer of both the surfaces of the multilayer film. When the multilayer film has a structure in which two or more layers are laminated in the thickness direction, the percentage of the thickness of the layer A (when the multilayer film has layers A on both surfaces, the percentage of the total thickness of both the surface layers) in the total thickness of the film is preferably 10 to 90%, more preferably 20 to 70% from the viewpoint of the film forming property and controlling the surface shape. If the percentage of the layer A is too large, the withstand voltage in a high-temperature environment may be lowered. On the other hand, if the percentage of the layer A is too small, the film may tend to be broken during film formation. Herein, the layer A is defined as a constituent layer containing a polypropylene resin, and the content rate of the polypropylene resin is preferably 95% by mass or more, more preferably 96% by mass or more, still more preferably 97% by mass or more. Meanwhile, the layer B is defined as a constituent layer containing a cyclic olefin resin, and the content rate of the cyclic olefin resin is preferably 95% by mass or more, more preferably 96% by mass or more, still more preferably 97% by mass or more. When the polypropylene resin is laminated on at least one surface of the multilayer film, it is possible to biaxially stretch the cyclic olefin resin of the inner layer, and to form a roughened shape of the surface which can impart processing suitability in the production of a capacitor element.

In the olefin multilayer film of the present invention, it is important that the film dielectric breakdown voltage at 135°C (hereinafter sometimes simply referred to as the dielectric breakdown voltage) be 280 V/$\mu$m or more. The dielectric breakdown voltage is more preferably 310 V/$\mu$m or more, still more preferably 330 V/$\mu$m or more from the viewpoint of obtaining a film excellent in withstand voltage at high temperatures and reliability in applications to capacitors for high voltage use. If the dielectric breakdown voltage at 135°C is less than 280 V/$\mu$m, a capacitor including the olefin multilayer film has a tendency to cause capacity reduction or short-circuit breakdown in a high-temperature environment to be lowered in the withstand voltage and lowered in the reliability. The upper limit of the dielectric breakdown voltage is not particularly limited, but is set to 700 V/$\mu$m. Herein, the dielectric breakdown voltage of the olefin multilayer film at 135°C can be controlled within the above-mentioned range by employing the above-mentioned structure including two or more layers in which at least one surface layer is the layer A, and controlling the temperature in the heat treatment and relaxation treatment steps after the biaxial stretching, which will be described later, to a temperature of 140°C or higher and not higher than (the melting point of the polypropylene resin - 5°C).

The cyclic olefin resin used in the olefin multilayer film of the present invention will be described. The cyclic olefin resin is a resin that is obtained by polymerization from a cyclic olefin as a monomer, and has an alicyclic structure in the main chain of a polymer. The cyclic olefin resin is a polymer containing more than 50% by mass and 100% by mass or less in total of cyclic olefin monomer-derived components (constituent units) in 100% by mass of the polymer of the cyclic olefin resin.

Examples of cyclic olefin monomers include monocyclic olefins such as cyclobutene, cyclopentene, cycloheptene, cyclooctene, cyclopentadiene, and 1,3-cyclohexadiene, bicyclic olefins such as bicyclo[2,2,1]hept-2-ene, 5-methyl-bicyclo[2,2,1]hepta-2-ene, 5,5-dimethyl-bicyclo[2,2,1]hept-2-ene, 5-ethyl-bicyclo[2,2,1]hept-2-ene, 5-butyl-bicyclo[2,2,1]hept-2-ene, 5-ethylidene-bicyclo[2,2,1]hept-2-ene, 5-hexyl-bicyclo[2,2,1]hept-2-ene, 5-octyl-bicyclo[2,2,1]hept-2-ene, 5-octadecyl-bicyclo[2,2,1]hept-2-ene, 5-methylidene-bicyclo[2,2,1]hept-2-ene, 5-vinyl-bicyclo[2,2,1]hept-2-ene, and 5-propenyl-bicyclo[2,2,1]hept-2-ene, tricyclic olefins such as tricyclo[4,3,0,1$^{2.5}$]deca-3,7-diene, tricyclo[4,3,0,1$^{2.5}$]deca-3-ene, tricyclo[4,3,0,1$^{2.5}$]undeca-3,7-diene, tricyclo[4,3,0,1$^{2.5}$]undeca-3,8-diene, tricyclo[4,3,0,1$^{2.5}$]undeca-3-ene, 5-cyclopentyl-bicyclo[2,2,1]hept-2-ene, 5-cyclohexyl-bicyclo[2,2,1]hept-2-ene, 5-cyclohexenylbicyclo[2,2,1]hept-2-ene, and 5-phenyl-bicyclo[2,2,1]hepta-2-ene, tetracyclic olefins such as tetracyclo[4,4,0,1$^{2.5}$,1$^{7.10}$]dodeca-3-ene, 8-methyltetracyclo[4,4,0,1$^{2.5}$,1$^{7.10}$]dodeca-3-ene, 8-ethyltetracyclo[4,4,0,1$^{2.5}$,1$^{7.10}$]dodeca-3-ene, 8-methylidenetetracyclo[4,4,0,1$^{2.5}$,1$^{7.10}$]dodeca-3-ene, 8-ethylidenetetracyclo[4,4,0,1$^{2.5}$,1$^{7.10}$]dodeca-3-ene, 8-vinyltetracyclo[4,4,0,1$^{2.5}$,1$^{7.10}$]dodeca-3-ene, and 8-propenyl-tetracyclo[4,4,0,1$^{2.5}$,1$^{7.10}$]dodeca-3-ene, and polycyclic olefins such as 8-cyclopentyl-tetracyclo[4,4,0,1$^{2.5}$,1$^{7.10}$]dodeca-3-ene, 8-cyclohexyl-tetracyclo[4,4,0,1$^{2.5}$,1$^{7.10}$]dodeca-3-ene, 8-cyclohexenyl-tetracyclo[4,4,0,1$^{2.5}$,1$^{7.10}$]dodeca-3-ene, 8-phenyl-cyclopentyl-tetracyclo[4,4,0,1$^{2.5}$,1$^{7.10}$]dodeca-3-ene, tetracyclo[7,4,1$^{3.6}$,0$^{1.9}$,0$^{2.7}$]tetradeca-4,9,11,13-tetraene, tetracyclo[8,4,1$^{4.7}$,0$^{1.10}$,0$^{3.8}$]pentadeca-5,10,12,14-tetraene, pentacyclo[6,6,1$^{3.6}$,0$^{2.7}$,0$^{9.14}$]-4-hexadecene, pentacyclo[6,5,1,1$^{3.6}$,0$^{2.7}$,0$^{9.13}$]-4-pentadecene, pentacyclo[7,4,0,0$^{2.7}$,1$^{3.6}$,1$^{10.13}$]-4-pentadecene, heptacyclo[8,7,0,1$^{2.9}$,1$^{4.7}$,1$^{11.17}$,0$^{3.8}$,0$^{12.16}$]-5-eicosene, heptacyclo[8,7,0,1$^{2.9}$,0$^{3.8}$,1$^{4.7}$,0$^{12.17}$,1$^{13.16}$]-14-eicosene, and a tetramer of cyclopentadiene. These cyclic olefin monomers can be used singly or in combination of two or more kinds.

Among the above-mentioned cyclic olefin monomers, bicyclo[2,2,1]hept-2-ene (hereinafter referred to as norbornene), tricyclic olefins having 10 carbon atoms such as tricyclo[4,3,0,12.5]deca-3-ene (hereinafter referred to as tricyclodecene), tetracyclic olefins having 12 carbon atoms such as tetracyclo[4,4,0,12.5,17.10]dodeca-3-ene (hereinafter referred to as tetracyclododecene), cyclopentadiene, or 1,3-cyclohexadiene is preferably used from the viewpoint of productivity and surface properties.

The cyclic olefin resin may be either of a resin obtained by polymerizing the cyclic olefin monomer alone (hereinafter sometimes referred to as a COP) and a resin obtained by copolymerizing the cyclic olefin monomer with a chain olefin monomer (hereinafter sometimes referred to as a COC), as long as the total content of the cyclic olefin monomer-derived components is more than 50% by mass and 100% by mass or less in 100% by mass of the polymer of the cyclic olefin resin.

The method for producing the COP may be a publicly known method such as addition polymerization or ring-opening polymerization of a cyclic olefin monomer. Examples of the method include a method of subjecting norbornene, tricyclodecene, tetracyclodecene, or a derivative thereof to ring-opening metathesis polymerization and then hydrolyzing the resulting polymer, a method of subjecting norbornene or a derivative thereof to addition polymerization, and a method of subjecting cyclopentadiene or cyclohexadiene to 1,2- or 1,4-addition polymerization and then hydrolyzing the resulting polymer. Among them, a resin obtained by subjecting norbornene, tricyclodecene, tetracyclodecene, or a derivative thereof to ring-opening metathesis polymerization and then hydrolyzing the resulting polymer is most preferable from the viewpoint of productivity and moldability.

In the case of a COC, examples of preferable chain olefin monomers include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene. Among them, ethylene can be particularly preferably used from the viewpoint of productivity and cost. Further, the method for producing a resin obtained by copolymerizing a cyclic olefin monomer with a chain olefin monomer may be a publicly known method such as addition polymerization of a cyclic olefin monomer and a chain olefin monomer. Examples of the method include addition polymerization of norbornene or a derivative thereof and ethylene. Among them, a copolymer of norbornene and ethylene is most preferable from the viewpoint of productivity and moldability.

The glass transition temperature of the cyclic olefin resin used in the olefin multilayer film of the present invention is preferably 125°C or higher, more preferably 130°C or higher, still more preferably 135°C or higher from the viewpoint of achieving dimensional stability and insulating properties in a high temperature range that are suitable for applications to capacitors.

If the glass transition temperature is lower than 125°C, thermal dimensional stability and dielectric breakdown voltage at high temperatures may be lowered. The upper limit of the glass transition temperature is not particularly limited, but is 200°C from the viewpoint of the film processability

It is more preferable that the olefin multilayer film of the present invention include the constituent layer containing the polypropylene resin on both surfaces of the base layer unit containing a cyclic olefin resin from the viewpoint of enabling biaxial stretching of the cyclic olefin resin in the inner layer and forming a surface for imparting processing suitability in the production of a capacitor element (roughened surface) . In the olefin multilayer film of the present invention, $\alpha$-spherocrystals are preferentially formed when the temperature for solidifying the melt-extruded film on a cooling drum in the film production process is set to a temperature lower than 60°C, preferably lower than 40°C. Therefore, it is possible to impart surface roughness to the film with particles without relying on crystal transformation from $\beta$-crystals to $\alpha$-crystals in the stretching step, even a thin film is excellent in processing suitability in the production of a capacitor element, and the film exhibits high withstand voltage even in a high-temperature environment. Alternatively, the olefin multilayer film of the present invention may have a structure in which the multilayer film includes particles in the surface layer. It is preferable to employ a technique of setting the temperature for solidifying the melt-extruded film on a cooling drum in the film production process to a high temperature of 60°C or higher to form $\beta$-spherocrystals, and transforming the $\beta$-crystals into $\alpha$-crystals in the stretching step to form roughness on the film surface.

Furthermore, the olefin multilayer film of the present invention may have a resin composition including a blend of the polypropylene resin and a thermoplastic resin incompatible with the polypropylene in the surface layer to impart, to the surface layer, surface roughness originating from a domain structure formed of the resins. For example, as a thermoplastic resin incompatible with the polypropylene, a polymethylpentene resin can be preferably used.

The polypropylene preferable as the polypropylene resin contained in the constituent layer located at the surface layer of the olefin multilayer film of the present invention is generally used in packaging materials and capacitors. Preferably, the polypropylene has a cold xylene soluble fraction (hereinafter referred to as the CXS) of 4% by mass or less. If the condition is not satisfied, the olefin multilayer film may be poor in film formation stability, or voids may be formed in the film during production of a biaxially stretched film, so that the dielectric breakdown voltage may be largely lowered.

Herein, the "cold xylene soluble fraction (CXS)" refers to a polypropylene component dissolved in xylene that is obtained by completely dissolving a film in xylene and then precipitating the resultant at room temperature. This component is thought to correspond to a component which is hardly crystallized because of low stereoregularity or a low molecular weight. When the resin contains a large amount of such a component, the film may have problems that the film is lowered in the withstand voltage. Accordingly, the CXS is preferably 4% by mass or less, more preferably 3% by mass or less, particularly preferably 2% by mass or less. For obtaining a polypropylene having such a CXS, it is possible to employ, for example, a method of improving the catalytic activity in obtaining a resin, or a method of washing the obtained resin with a solvent or a propylene monomer itself.

A polypropylene having a melt flow rate (MFR) of 1 to 10 g/10 min (230°C, load of 21.18 N) is more preferable, and a polypropylene having an MFR of 2 to 5 g/10 min (230°C, load of 21.18 N) is particularly preferable from the viewpoint of the film processability. In order to set the MFR to a value within the above-mentioned range, a method of controlling the average molecular weight or molecular weight distribution is employed.

The polypropylene is mainly made of a homopolymer of propylene, but the polypropylene may contain a copolymerizing component based on another unsaturated hydrocarbon, or may be blended with a polymer that is not a homopolymer of propylene as long as the object of the present invention is not impaired. Examples of monomer components that constitute such a copolymerizing component or blended polymer include ethylene, propylene (in the case of a copolymerized blend), 1-butene, 1-pentene, 3-methylpentene-1, 3-methylbutene-1, 1-hexene, 4-methylpentene-1, 5-ethylhexene-1, 1-octene, 1-decene, 1-dodecene, vinylcyclohexene, styrene, allylbenzene, cyclopentene, norbornene, and 5-methyl-2-norbornene. As for the amount of copolymerization or the blend, it is preferable that the former be less than 1 mol% and the latter be less than 10% by mass from the viewpoint of withstand voltage and heat resistance.

Further, the polypropylene may contain various additives such as a crystal nucleating agent, an antioxidant, a heat stabilizer, a sliding agent, an antistatic agent, an antiblocking agent, a filler, a viscosity adjustor, a coloring inhibitor, and a resin other than the polypropylene as long as the object of the present invention is not impaired.

Among these additives, selection of the kind and addition amount of the antioxidant is important from the viewpoint of long-term heat resistance. That is, the antioxidant is preferably phenolic compounds having steric hindrance, and at least one of the compounds is preferably a compound of a high molecular weight type having a molecular weight of 500 or more. Specific examples thereof include various antioxidants, and it is preferable to use, for example, 2,6-di-t-butyl-p-cresol (BHT: molecular weight 220.4) in combination with 1,3,5-trimethyl-2,4,6-tris(3,5-di-t-butyl-4-hydroxybenzyl)b enzene (e.g., Irganox (registered trademark) 1330 manufactured by BASF Japan Ltd.: molecular weight 775.2) or tetrakis[methylene-3(3,5-di-t-butyl-4-hydroxyphenyl)propion ate]methane (e.g., Irganox (registered trademark) 1010 manufactured by BASF Japan Ltd. : molecular weight 1177.7) . The total content of these antioxidants is preferably in the range of 0.03 to 1.0% by mass based on the total amount of the polypropylene. If the amount of the antioxidant is too small, the film may be poor in long-term heat resistance. If the amount of the antioxidant is too large, the capacitor element may be adversely affected due to blocking at high temperatures resulting from bleeding out of the antioxidant. The content is more preferably 0.1 to 0.9% by mass, particularly preferably 0.2 to 0.8% by mass.

In the olefin multilayer film of the present invention, it is preferable that the polypropylene resin contained in the constituent layer located at the surface layer have a meso-pentad fraction of 0.95 or more and a melting point higher than 160°C. The meso-pentad fraction is more preferably 0.97 or more, still more preferably 0.98 or more. The meso-pentad fraction is an index of stereoregularity of a crystal phase of a polypropylene measured by a nuclear magnetic resonance method (NMR method), and a polypropylene having a higher meso-pentad fraction is preferable because it has higher degree of crystallinity, higher melting point, and higher dielectric breakdown voltage in a high-temperature environment. The upper limit of the meso-pentad fraction is not particularly specified. In order to obtain such a polypropylene having a high meso-pentad fraction and a high melting point, for example, a method of selecting an appropriate electron-donating component in the so-called Ziegler-Natta catalyst is preferably employed. If the meso-pentad fraction of the polypropylene resin is less than 0.95, since the regularity of the polypropylene is low, the strength or dielectric breakdown voltage of the film in a high-temperature environment may be lowered, and the film may be broken during film transport in the step of forming a metal membrane by vapor deposition, or in the step of winding the capacitor element. The melting point of the polypropylene resin is more preferably 163°C or higher, still more preferably 165°C or higher. If the melting point is 160°C or lower, since the crystallinity is low, the dielectric breakdown voltage of the film in a high-temperature environment may be lowered, and the film may be broken during film transport in the step of forming a metal membrane by vapor deposition, or in the step of winding the capacitor element.

When particles are incorporated into the olefin multilayer film of the present invention, inorganic particles and organic particles are preferably used. Examples of the inorganic particles include metal oxides such as silica, alumina, titania, and zirconia, barium sulfate, calcium carbonate, aluminum silicate, calcium phosphate, mica, kaolin, and clay. Of these, metal oxides such as silica, alumina, titania, and zirconia, and calcium carbonate are preferable. Examples of the organic particles include crosslinked particles of a polymethoxysilane compound, crosslinked particles of a polystyrene compound, crosslinked particles of an acrylic compound, crosslinked particles of a polyurethane compound, crosslinked particles of a polyester compound, crosslinked particles of a fluorine compound, and mixtures thereof.

The average particle size of the inorganic particles and the organic particles is preferably in the range of 0.03 to 10 $\mu$m. The average particle size is more preferably 0.05 to 6 $\mu$m, still more preferably 0.07 to 4 $\mu$m, most preferably 0.1 to 2 $\mu$m. If the average particle size is less than 0.03 $\mu$m, the olefin multilayer film has a low surface roughness, and the olefin multilayer film may be insufficient in handleability or the capacitor reliability may be lowered. On the other hand, if the average particle size exceeds 10 $\mu$m, the film tends to break easily or falls off from a thin film, which may easily cause insulation defects.

Herein, as for a method of measuring the average particle size of the inorganic particles or the organic particles, the weight average diameter is calculated using the equivalent circle diameter of the particles obtained by image processing from a transmission electron micrograph of the particles, and used as the average particle size.

The content of the particles is preferably 0.01 to 1 part by mass relative to 100 parts by mass in total of the constituent layer containing the polypropylene resin. If the content is less than 0.01 parts by mass, the olefin multilayer film may be insufficient in handleability or the capacitor reliability may be lowered. If the content exceeds 1 part by mass, the film tends to break easily or falls off from a thin film, which may easily cause insulation defects.

The olefin multilayer film of the present invention preferably has an elongation at break of 20% or more in both the longitudinal direction and the width direction of the film. The elongation at break is more preferably 30% or more, still more preferably 40% or more. When the elongation at break is less than 20% in both the longitudinal direction and the width direction of the film, the film may become incapable of withstanding the stress in the film transport and broken in the vapor deposition step and the element processing step in the production of a capacitor. The upper limit of the elongation at break is not particularly limited, but is set to 200% in both the longitudinal direction and the width direction of the film. The elongation at break can be controlled within the above-mentioned range by employing the above-mentioned structure including two or more layers in which at least one surface layer is the layer A, performing the biaxial stretching described later, and controlling the temperature in the heat treatment and relaxation treatment steps after the stretching to a temperature of 140°C or higher and not higher than (the melting point of the polypropylene resin - 5°C) .

The olefin multilayer film of the present invention preferably has a thermal shrinkage rate at 135°C of 2% or less in both the longitudinal direction and the width direction of the film. The thermal shrinkage rate is more preferably 1.2% or less, still more preferably 0.8% or less. The lower limit of the thermal shrinkage rate is not particularly limited, but it is set to -2% in view of the case where the wound state of the element is loosened due to the heat in the capacitor production process or use process. If the thermal shrinkage rate exceeds 2%, shrinkage of the film itself occurs due to the heat in the capacitor production process or use process, the withstand voltage of the element may lower due to poor contact with the metal-sprayed part at the end of the element, and tight winding of the element may cause capacity reduction or short-circuit breakdown. The thermal shrinkage rate can be controlled within the above-mentioned range by employing the above-mentioned structure including two or more layers in which at least one surface layer is the layer A, and controlling the temperature in the heat treatment and relaxation treatment steps after the biaxial stretching, which will be described later, to a temperature of 140°C or higher and not higher than (the melting point of the polypropylene resin - 5°C) .

In the olefin multilayer film of the present invention, from the viewpoint of obtaining uniformity of film interlayer spacing, ease of sliding between films or between a film and a transfer roll, and reliability as a capacitor, it is preferable that both the surfaces of the olefin multilayer film have a center line average roughness SRa of 20 nm or more and a ten-point average roughness SRz of 200 nm or more. It is more preferable that both the surfaces of the olefin multilayer film have a center line average roughness SRa of 40 nm or more and a ten-point average roughness SRz of 350 nm or more. It is still more preferable that both the surfaces of the olefin multilayer film have a center line average roughness SRa of 60 nm or more and a ten-point average roughness SRz of 500 nm or more. If the center line average roughness SRa is less than 20 nm and the ten-point average roughness SRz is less than 200 nm, the film may be extremely lowered in slidability and poor in handleability, so that wrinkles tend to occur. Moreover, when the film is continuously used as a capacitor, change in capacitance may increase due to the influence of wrinkles or the like, or the reliability of a capacitor obtained by laminating the films may be lowered because there is no moderate spacing between film layers and therefore a self-healing function is hardly exerted. The upper limit is not particularly limited, but is set to 500 nm for the center line average roughness SRa of both the surfaces, and is set to 1,500 nm for the ten-point average roughness SRz of both the surfaces. The center line average roughness SRa of the olefin multilayer film of the present invention can be controlled within the preferable range by employing the above-mentioned structure including two or more layers in which at least one surface layer is the layer A, and controlling the conditions such as the type and amount of the particles added, and the cooling temperature of the molten sheet in the cooling and solidification within preferable ranges.

In the olefin multilayer film of the present invention, both the surfaces of the multilayer film preferably have a glossiness of 110% or more and less than 145%, more preferably 115% or more and less than 140%, still more preferably 120% or more and less than 135%. Setting the glossiness to less than 110%, that is, lowering the glossiness means to increase the density of light scattering on the film surface, in other words, surface roughening. Thus, the dielectric breakdown voltage may tend to lower or vary. On the other hand, if the glossiness exceeds 145%, it means that the film surface is flattened. Thus, the film may be extremely lowered in slidability and poor in handleability, so that wrinkles tend to occur. Moreover, when the film is continuously used as a capacitor, change in capacitance may increase due to the influence of wrinkles or the reliability of a capacitor obtained by laminating the films may be lowered because there is no moderate spacing between film layers and therefore a self-healing function is hardly exerted. The glossiness of the olefin multilayer film of the present invention can be controlled within the preferable range by employing the above-mentioned structure including two or more layers in which at least one surface layer is the layer A, and controlling the conditions such as the type and amount of the particles added, and the cooling temperature of the molten sheet in the cooling and solidification within preferable ranges.

The olefin multilayer film of the present invention preferably has a volume resistivity at 135°C of $1 \times 10^{14}$ $\Omega \cdot$cm or more, more preferably $3 \times 10^{14}$ $\Omega \cdot$cm or more, still more preferably $5 \times 10^{14}$ $\Omega \cdot$cm or more. The upper limit of the volume resistivity is not particularly limited, but is set to $1 \times 10^{17}$ $\Omega \cdot$cm. If the volume resistivity at 135°C is less than $1 \times 10^{14}$ $\Omega \cdot$cm, when the olefin multilayer film is incorporated into a capacitor, the leakage current may be increased particularly in a high-temperature environment, so that capacity reduction or short-circuit breakdown due to self-heating of the capacitor may occur, the withstand voltage may be lowered, and reliability may be impaired. The volume resistivity at 135°C can be controlled within the above-mentioned range by employing the above-mentioned structure including two or more layers in which at least one surface layer is the layer A, controlling the conditions such as the cooling temperature of the molten sheet in the cooling and solidification within preferable ranges, and controlling the temperature in the heat treatment and relaxation treatment steps after the biaxial stretching, which will be described later, to a temperature of 140°C or higher and not higher than (the melting point of the polypropylene resin - 5°C).

The olefin multilayer film of the present invention is excellent in transparency, slidability, and high temperature characteristics, and is therefore suitably used in general industrial applications and packaging applications. The olefin multilayer film is of course useful for general capacitors generally having a thickness of 30 $\mu$m or less, and is particularly suitable for thin film heat-resistant film capacitors required for applications of automobiles (including a hybrid car application) which are used in a high-temperature environment. In particular, the film thickness is preferably in the range of 0.5 µm or more and less than 15 µm, more preferably 0.5 µm or more and 10 µm or less, still more preferably 0.8 µm or more and 5.0 µm or less. The thickness of the olefin multilayer film of the present invention can be controlled within the above-mentioned range by laminating the above-mentioned structure including two or more layers in which at least one surface layer is the layer A, preferably a structure including at least three layers of A/B/A through coextrusion, and biaxially stretching the resultant laminate as described later.

The olefin multilayer film of the present invention is preferably used as a dielectric film for a capacitor, but it is not limited to a capacitor type film. Specifically, the olefin multilayer film may be used in either of a foil-wound capacitor and a metal evaporated film capacitor from the viewpoint of electrode configuration, and is also preferably used in an oil-impregnated capacitor impregnated with an insulating oil or a dry capacitor that does not contain an insulating oil at all. Further, the form of the capacitor may be a wound type or a laminated type. The olefin multilayer film of the present invention, however, is particularly preferably used as a metal evaporated film capacitor in view of the film characteristics.

An olefin multilayer film is generally low in surface energy, and is difficult to be stably subjected to metal vapor deposition. Therefore, it is preferable to surface-treat the olefin multilayer film before vapor deposition for the purpose of improving the adhesion force to the metal. Specific examples of the surface treatment include corona discharge treatment, plasma treatment, glow treatment, and flame treatment. While the surface wet tension of a polypropylene resin film is generally about 30 mN/m, it is preferable to increase the wet tension of a polypropylene resin film to 37 to 50 mN/m, preferably to about 39 to 48 mN/m by the surface treatment because adhesion to a metal membrane and security are improved.

The olefin multilayer film of the present invention is obtained by biaxially stretching a raw material which can give the above-mentioned characteristics. As a method of biaxial stretching, any of inflation simultaneous biaxial stretching, tenter simultaneous biaxial stretching, and tenter sequential biaxial stretching may be employed. Among these methods, tenter sequential biaxial stretching is preferably employed from the viewpoint of controlling the film formation stability, uniformity of thickness, and formability of surface irregularities.

Then, an example of a method for producing the olefin multilayer film of the present invention will be described.

First, a multilayer film of a cyclic olefin resin and a polypropylene resin is melt-extruded onto a support to form an olefin resin multilayer sheet, and the multilayer sheet is subjected to sequential biaxial stretching including longitudinal and transverse stretching, and then to heat treatment and relaxation treatment to produce an olefin multilayer film. Although the method will be described more specifically below, the method is not necessarily limited thereto.

First, an unstretched sheet is obtained in the following manner: a polypropylene resin raw material A having a meso-pentad fraction of 0.95 or more and a melting point higher than 160°C is supplied to a single-screw extruder for the layer A, a cyclic olefin resin raw material B is supplied to a single-screw extruder for the layer B, and the raw materials are melted and co-extruded at 200 to 260°C by a feedblock method from a slit-shaped die to form resins laminated in a three-layer structure of layer A/layer B/layer A, or resins laminated in two or more layers, such as resins laminated in a two-layer structure of layer A/layer B, and solidified on a cooling drum (casting drum) controlled to a temperature of 20 to 100°C. As a method for bringing the resins into close contact with the casting drum, any technique such as an electrostatic application method, an adhesion method based on the surface tension of water, an air knife method, a press roll method, and an underwater casting method may be used. In the case of a two-layer structure of layer A/layer B, the surface of the unstretched sheet on the layer B side can be flattened by extruding the resins from the slit-shaped die so that the layer B of the molten laminated polymer comes into contact with the casting drum surface. In the case of a multilayer film without an adhesive layer, such as a film produced not by coextrusion lamination but by coating or lamination, the adhesive strength at the resin interface between the layer A and the layer B is insufficient, and peeling may occur in the film vapor deposition step or capacitor processing step, or even if the film can be processed, the withstand voltage performance at high temperatures may deteriorate. Alternatively, in the case of a multilayer film formed with use of an adhesive, the withstand voltage performance at high temperatures may deteriorate due to the influence of the adhesive.

Then, the unstretched sheet is biaxially stretched. First, the unstretched sheet is passed over a roll maintained at 60 to 160°C for preheating, and then the sheet is stretched 1.5 to 10 times in the longitudinal direction while being maintained at the temperature of 60 to 160°C. Then, the sheet is cooled to room temperature to give a longitudinally uniaxially stretched film. A more preferable stretch ratio in the longitudinal direction is 2 to 9 times, more preferably 2.5 to 8 times. The stretching method and the stretch ratio are not particularly limited, and are appropriately selected according to the characteristics of the used polymer.

Then, the longitudinally uniaxially stretched film is led to a tenter, an end of the film is held with a clip, and the film is transversely stretched 5.1 to 15 times, more preferably 6 to 12 times in the width direction at a temperature of 140 to 175°C. If the stretch ratio in the width direction is less than 5.1 times, the mechanical strength in the width direction of the olefin multilayer film may deteriorate, or the thickness unevenness may increase, so that the withstand voltage sometimes decreases. On the other hand, if the stretch ratio in the width direction exceeds 15 times, film breakage tends to occur easily, and the productivity may deteriorate. In the present invention, in the case of an unstretched sheet not having been subjected to biaxial stretching, peeling between the polypropylene resin of the layer A and the cyclic olefin resin of the layer B may occur, or the unstretched sheet may become incapable of withstanding the stress in the sheet transport and broken due to insufficient elongation at break in the vapor deposition step and the element processing step in the production of a capacitor.

In the present invention, in the subsequent heat treatment and relaxation treatment steps, it is preferable to subject the film to heat treatment at a temperature of 130°C or higher and not higher than the melting point of the polypropylene resin while holding the film in the width direction tightly with a clip and relaxing the film in the width direction by 2 to 20% from the viewpoint of uniformly relaxing the film in the plane, reducing the local unevenness in structure, improving the withstand voltage characteristics, and obtaining thermal dimensional stability. The heat treatment temperature in the heat treatment step is preferably 140°C or higher and not higher than (the melting point of the polypropylene resin - 5°C), more preferably 145°C or higher and not higher than (the melting point of the polypropylene resin - 10°C). If the heat treatment temperature is lower than 130°C, thermal dimensional stability cannot be obtained, and capacity reduction or short-circuit breakdown may occur in a high-temperature usage environment when the film is incorporated into a capacitor. On the other hand, if the heat treatment temperature exceeds the melting point of the polypropylene resin, the film may be broken during film formation.

The relaxation ratio in the relaxation treatment step is preferably 5 to 18%, more preferably 8 to 15%. If the relaxation ratio exceeds 18%, the film may be too slack inside the tenter, wrinkles may be formed in the product, and unevenness may be generated at the time of vapor deposition, whereas if the relaxation ratio is less than 5%, thermal dimensional stability cannot be obtained, and capacity reduction or short-circuit breakdown may occur in a high-temperature usage environment when the film is incorporated into a capacitor.

After being subjected to the heat treatment and relaxation treatment steps, the film is subjected to a cooling step at 50 to 140°C while being tightly held in the width direction with the clip, led to the outside of the tenter, the clip at the end of the film is released, the film edge portion is slit in the winder step, and then the film is wound up into a film product roll. A surface of the film to be subjected to vapor deposition is preferably subjected to corona discharge treatment in the air, nitrogen, carbon dioxide gas, or a mixed gas of these before the film is wound up in order to improve adhesion of the evaporated metal.

In the present invention, it is also preferable to form a metal membrane on the surface of the above-mentioned olefin multilayer film to provide a metal membrane multilayer film. The method of forming the metal membrane is not particularly limited. For example, it is preferable to employ a method of vapor-depositing aluminum on at least one surface of the olefin multilayer film to form a metal membrane that serves as an internal electrode of a film capacitor, such as an aluminum evaporated film. In this case, other metal components such as nickel, copper, gold, silver, chromium, and zinc may be vapor-deposited simultaneously with aluminum or sequentially. A protective layer may be formed using an oil on the evaporated film.

In the present invention, after a metal membrane is formed, the metal membrane multilayer film may be subjected to annealing treatment or heat treatment at a specific temperature as required. Further, at least one surface of the metal membrane multilayer film may be coated with polyphenylene oxide for the purpose of insulation.

The metal membrane multilayer film thus obtained can be laminated or wound by various methods to form a film capacitor. An example of a preferable production method of a wound film capacitor is as follows.

Aluminum is vapor-deposited on one surface of an olefin multilayer film under a reduced pressure. In the vapor deposition, aluminum is vapor-deposited in a stripe pattern having margins running in the film longitudinal direction. Then, slits are made with an edge in the center of each aluminum deposited portion and the center of each margin on the surface to prepare a tape-shaped winding reel having margins on one side in the surface. Two tape-shaped winding reels each having margins on a left side or a right side are laminated so that the aluminum deposited portion is protruded from the margin in the width direction, and wound to give a wound body.

When both surfaces of the film are subjected to vapor deposition, aluminum is vapor-deposited in a stripe pattern having margins running in the longitudinal direction in one surface, and aluminum is vapor-deposited in a stripe pattern so that margins in the longitudinal direction are positioned at the center of the aluminum deposited portion on the back surface. Then, slits are made with an edge in the center of each margin on the front and back surfaces to prepare a tape-shaped winding reel having margins on one side in both the front and back surfaces (for example, when the front margin is present on the right side, the back margin is present on the left side) . The obtained reel and a non-deposited coupled film are laminated so that the metalized film is protruded from the coupled film in the width direction, and wound to give a wound body.

A core material is removed from the wound body produced as described above, and the wound body is pressed. The wound body is subjected to metal spraying at both end surfaces to form an external electrode, and a lead wire is welded to the metal-sprayed parts to give a wound film capacitor. The film capacitor is used in wide applications, for example, railway vehicles, automobiles (hybrid cars and electric vehicles), solar power generation and wind power generation, and general home electronics. The film capacitor of the present invention can also be suitably used in these applications. The film capacitor can also be used in various applications such as packaging films, release films, process films, sanitary articles, agricultural articles, building articles, and medical supplies.

Measurement methods of characteristic values in the present invention, and the methods for evaluating the effects are as follows.

(1) Film thickness

The thicknesses of arbitrary 10 points in total of an olefin multilayer film were measured with a contact type electronic micrometer (type K-312A) manufactured by ANRITSU CORPORATION in an atmosphere of 23°C and 65% RH. The average of the thicknesses of the 10 points was taken as the film thickness of the olefin multilayer film.

(2) Film dielectric breakdown voltage at 135°C (V/$\mu$m)

A film was heated for 1 minute in an oven maintained at 135°C, and then a dielectric breakdown voltage test was carried out 30 times according to JIS C 2330 (2001) 7.4.11.2 B method (flat plate electrode method) in the atmosphere. The obtained value was divided by the thickness of the film (above-mentioned (1)) and converted into (V/$\mu$m). From the measured values (calculated values) of 30 points in total, 5 points in descending order from the maximum dielectric breakdown voltage and 5 points in ascending order from the minimum dielectric breakdown voltage were excluded, and the average of the remaining 20 points was taken as the film dielectric breakdown voltage at 135°C.

(3) Elongation at break in longitudinal direction and width direction of film

An olefin multilayer film was cut in the width direction and the longitudinal direction each into 5 samples each having a width of 10 mm and a length of 50 mm (measurement direction), and each sample was marked at a position of 15 mm from each end to mark a test length of 20 mm. Then, the rectangular sample was set on a tensile tester (Tensilon UCT-100 manufactured by ORIENTEC CORPORATION) at an initial chuck distance of 20 mm, and a tensile test of the film was carried out at a tensile speed of 300 mm/min in an atmosphere of 23°C. In this way, the elongation at the time the sample was broken (unit: %) was obtained. Measurements were made 5 times for each of the film longitudinal direction and width direction, and the average of the values in each direction was calculated to obtain the elongation at break.

(4) Glossiness

Using a digital variable angle gloss meter UGV-5D manufactured by Suga Test Instruments Co., Ltd. according to JIS K 7105 (1981), the surface of a film on the side in contact with the casting drum and the surface of the film on the side not in contact with the casting drum were each measured under conditions of an incident angle of 60° and a light receiving angle of 60°. The averages of data at 5 points were taken as the glossiness of the drum-side surface and the glossiness of the reverse surface.

(5) Center line average roughness SRa and ten-point average roughness SRz

The three-dimensional surface roughness was measured with surf-corder ET-4000A manufactured by Kosaka Laboratory Ltd. according to JIS B0601 (1982). The details of the measurement conditions are as follows. The sample set was set on the sample table so that the X direction of the visual field measurement was the width direction of the olefin multilayer film and the upper surface was the measurement surface. The surface roughness was measured 10 times at different positions under the following conditions. The average of center line average roughnesses of the samples was calculated as the center line average roughness SRa, and the average of ten-point average roughnesses was calculated as the ten-point average roughness SRz. The measurement was made on both the front and back surfaces of the film. The surface in contact with the casting drum was regarded as the drum-side surface, and the surface not in contact with the casting drum was regarded as the reverse surface.

Apparatus: "Surf-corder ET-4000A" manufactured by Kosaka Laboratory Ltd.
Analysis software: i-Face model TDA31
Stylus tip radius: 0.5 $\mu$m
Measurement visual field:

X direction: 1000 $\mu$m, pitch: 5 $\mu$m
Y direction: 250 $\mu$m, pitch: 10 $\mu$m

Needle pressure: 50 $\mu$N

Measurement speed: 0.1 mm/s
Cut-off value: Low region 0.2 mm, high region - none
Leveling: All regions
Filter: Gaussian filter (space type)
Magnification: 20,000 times

(6) Thermal shrinkage rate at 135°C

An olefin multilayer film was cut in the width direction and the longitudinal direction each into 5 samples each having a width of 10 mm and a length of 50 mm (measurement direction), and each sample was marked at a position of 5 mm from each end to mark a test length of 40 mm ($l_0$). Then, each test piece was sandwiched between paper, heated in an oven maintained at 135°C for 10 minutes in a state of being horizontally held, and then taken out and cooled at room temperature. The dimension ($l_1$) was measured and the thermal shrinkage rate was determined by the following formula. The average of the thermal shrinkage rates of 5 test pieces was taken as the thermal shrinkage rate in each direction.

$$\text{Thermal shrinkage rate} = \{(l_0 - l_1)/l_0\} \times 100 \ (\%)$$

(7) Meso-pentad fraction

The polypropylene in the film was extracted with n-heptane at 60°C for 2 hours to remove impurities and additives in the polypropylene, followed by drying under reduced pressure at 130°C for 2 hours or more, and the resultant was used as a sample. The sample was dissolved in a solvent, and the meso-pentad fraction (mmmm) was determined by $^{13}$C-NMR under the following conditions.

Measurement conditions

- Apparatus: DRX-500 manufactured by Bruker Corporation
- Measurement nucleus: $^{13}$C nucleus (resonance frequency: 125.8 MHz)
- Measurement concentration: 10% by mass
- Solvent: benzene/deuterated ortho-dichlorobenzene = 1 : 3 mixed solution (volume ratio)
- Measurement temperature: 130°C
- Spin rotation number: 12 Hz
- NMR sample tube: 5 mm tube
- Pulse width: 45° (4.5 $\mu$s)
- Pulse repetition period: 10 seconds
- Data point: 64 K
- Number of integrations: 10,000 times
- Measurement mode: complete decoupling

Analysis conditions

Fourier transformation was performed with an LB (line broadening factor) of 1, and the mmmm peak was set to 21.86 ppm. Peak splitting was carried out with WINFIT software (manufactured by Bruker Corporation). The peak splitting was carried out from a peak on high magnetic field in the following manner, and automatic fitting of the software was carried out to perform the optimization of peak splitting. The total of peak fractions of mmmm and ss (spinning side band peak of mmmm) was taken as the meso-pentad fraction (mmmm).

(1) mrrm
(2) (3) rrrm (split as two peaks)
(4) rrrr
(5) mrmm + rmrr
(6) mmrr
(7) mmmr
(8) ss (spinning side band peak of mmmm)

(9) mmmm
(10) rmmr

The same measurement was performed 5 times on the same sample, and the average of the obtained meso-pentad fractions was taken as the meso-pentad fraction of the sample.

(8) Melting point of polypropylene resin

Using a differential scanning calorimeter (EXSTAR DSC 6220 manufactured by Seiko Instruments Inc.), 3 mg of a polypropylene resin was heated from 30°C to 260°C at a rate of 40°C/min in a nitrogen atmosphere. Then, the resin was held at 260°C for 5 minutes, and then cooled down to 30°C at a rate of 40°C/min. Further, after the resin was held at 30°C for 5 minutes, the temperature was raised from 30°C to 260°C at a rate of 40°C/min. The peak temperature of the endothermic curve obtained during the temperature rise was taken as the melting point of the polypropylene resin.

(9) Glass transition temperature of cyclic olefin resin

Using a differential scanning calorimeter (EXSTAR DSC 6220 manufactured by Seiko Instruments Inc.), 3 mg of a cyclic olefin resin was heated from 30°C to 260°C at a rate of 40°C/min in a nitrogen atmosphere. Then, the resin was held at 260°C for 5 minutes, and then cooled down to 30°C at a rate of 40°C/min. Further, after the resin was held at 30°C for 5 minutes, the temperature was raised from 30°C to 260°C at a rate of 40°C/min. The glass transition temperature obtained during the temperature rise was calculated by the following formula.

Glass transition temperature = (extrapolated glass transition starting temperature + extrapolated glass transition end temperature)/2

Herein, the extrapolated glass transition starting temperature is the temperature at the intersection between a straight line obtained by extending the low-temperature side base line to the high temperature side and the tangent line drawn at the point where the stepwise changing section of the grass transition curve has the maximum gradient. The extrapolated glass transition end temperature is the temperature at the intersection between a straight line obtained by extending the high-temperature side base line to the low temperature side and the tangent line drawn at the point where the stepwise changing section of the grass transition curve has the maximum gradient.

(10) Volume resistivity at 135°C

According to JIS K 6911 (2006), the elements were connected as shown in Fig. 1, and the test piece was held at 110°C for 30 minutes and then charged at a voltage of 100 V for 1 minute to measure the volume resistance $R_v$ ($\Omega$). From the obtained volume resistance, the volume resistivity $\rho_v$ ($\Omega\cdot$cm) was calculated using the expression (1). In the expression, d is the diameter (cm) of the main electrode, and t is the thickness (cm) of the film sample. The thicknesses of the film sample were measured at arbitrary 5 positions in the measurement sample with a laser hollow gauge manufactured by Mitutoyo Corporation, and the arithmetic mean value thereof was taken as the sample thickness. The volume resistivity was calculated using measured values at room temperature.

Measuring apparatus: ULTRA HIGH RESISTANCE METER R 8340A (manufactured by ADC CORPORATION)
TEST FIXTURE TR43C (manufactured by ADVANTEST)
Film sample piece dimension: 40 mm $\times$ 40 mm
Electrode shape:

Main electrode; $\varphi$ 10 mm
Annular electrode; internal diameter $\varphi$ 13 mm, outer diameter $\varphi$ 26 mm
Counter electrode; $\varphi$ 28 mm

Material of electrodes: Both of the main electrode and the counter electrode are made from a conductive paste
Annular electrode; metal electrode (gold plated product)
Applied voltage: 100 V/1 minute value
Pretreatment: 90 hours in an atmosphere of 22 $\pm$ 1°C, 60 $\pm$ 5% RH in a thermo-hygrostat
Test temperature: room temperature 135°C
[Expression 1]

$$\text{Volume resistivity } \rho_v = \frac{\pi\,d^2}{4\,t} \times R_v \qquad \cdots (1)$$

(11) Processing suitability in production of capacitor element and capacitor characteristics in atmosphere of 125°C

Aluminum was vapor-deposited on (the side in contact with the casting drum of) a film obtained in each of the examples and comparative examples described later with a vacuum deposition machine manufactured by ULVAC, Inc. so that the film resistance would be 8 $\Omega$/sq and the resulting evaporated reel would have an evaporated pattern having a so-called T-shaped margin pattern which included a margin in a direction perpendicular to the longitudinal direction. In this way, an evaporated reel having a width of 50 mm was obtained.

Then, a capacitor element was wound on the reel using a device winding machine (KAW-4NHB) manufactured by KAIDO MFG. CO., LTD., the resultant was subjected to metal spraying and then to heat treatment at a temperature of 135°C for 10 hours under a reduced pressure, and a lead wire was attached to the resultant to give a finished capacitor element.

Using 10 capacitor elements thus obtained, a voltage of 200 V DC was applied to the capacitor elements at a high temperature of 125°C, and after 10 minutes at the voltage, the applied voltage was gradually raised stepwise at a voltage rise rate of 50 V DC/1 minute. This was repeated to carry out a so-called step-up test. In each step, the holding time was set to 10 minutes.

<Processing suitability in production of capacitor element>

A capacitor element was produced in the same manner as described above, and the shape of the element was visually observed. The processing suitability was judged based on the following criteria.
A: There is no deviation or deformation of the film of the capacitor element, and there is no problem at all in the subsequent steps
B: Although there is some deviation and/or deformation of the film of the capacitor element, there is no problem in the subsequent steps
D: The deviation and/or deformation of the film of the capacitor element is large, and there are problems in the subsequent steps
Elements judged as A or B are usable. Elements judged as D are difficult to put to practical use.

<Withstand voltage>

The change in electrostatic capacitance in this test was measured and plotted on the graph, and the voltage at which the capacitance reached 70% of the initial value was divided by the thickness of the film (the above-mentioned (1)) to give a withstand voltage evaluation, and evaluation was made as follows.
A: 350 V/$\mu$m or more
B: 320 V/$\mu$m or more and less than 350 V/$\mu$m
C: 300 V/$\mu$m or more and less than 320 V/$\mu$m
D: less than 300 V/$\mu$m

Elements judged as A or B are usable. Elements judged as C or D are inferior in practical performance.

<Reliability>

The voltage was raised until the electrostatic capacitance decreased to 10% or less relative to the initial value, then the capacitor element was disassembled, the state of breakage was examined, and the reliability was evaluated as follows.

A: There is no change in the element shape, and no penetrating breakage is observed.
B: There is no change in the element shape, and penetrating breakage through not more than 10 film layers is observed.
C: Changes in the element shape are observed, or penetrating breakage through more than 10 layers is observed.
D: The element shape is broken.

Elements judged as A are usable without problems, and elements judged as B are usable depending on conditions. Elements judged as C or D are inferior in practical performance.

EXAMPLES

Hereinafter, the effects of the present invention will be further described by way of examples.

(Example 1)

To a polypropylene resin manufactured by Prime Polymer Co., Ltd. having a meso-pentad fraction of 0.98, a melting point of 167°C, and a melt flow rate (MFR) of 2.6 g/10 min, 1.0% by mass of a polypropylene resin (high melt strength polypropylene Profax PF-814) manufactured by Basell was blended, and the blend was supplied to a single-screw melt extruder A for the layer A at a temperature of 260°C. A COC as the cyclic olefin resin, that is, 99.7 parts by mass of "TOPAS" (registered trademark) 6013F-04 (a resin obtained by copolymerizing ethylene with norbornene and having a glass transition temperature of 138°C) manufactured by POLYPLASTICS CO., LTD., and 0.3 parts by mass of IRGANOX 1010 manufactured by Ciba Specialty Chemicals as an antioxidant were mixed, and the mixture was supplied to a single-screw melt extruder B for the layer B at a temperature of 260°C. The materials were respectively melt-extruded from the extruders for the layers A and B, contaminants were removed with a 80 $\mu$m cut sintered filter, and then the extrusion amount was adjusted with a feedblock so that the layer thickness ratio would be 1/1/1 in the three-layer lamination of A/B/A (the percentage of the surface layers, that is, the layers A in the whole film thickness was 66.7%). The obtained molten laminated polymer was discharged from a T-die, and the molten sheet was brought into close contact with a casting drum maintained at 70°C by electrostatic application, and cooled and solidified to give an unstretched sheet. Then, the sheet was gradually preheated to 145°C with multiple rolls, passed between rolls having a circumferential speed difference while being maintained at the temperature of 145°C, and stretched 2.8 times in the longitudinal direction. Then, the film was led to a tenter, stretched 9.8 times in the width direction at a temperature of 165°C, then subjected to heat treatment at 155°C while being relaxed by 10% in the width direction as the heat treatment and relaxation treatment. The film was subjected to a cooling step at 100°C while being held in the width direction with a clip and led to the outside of the tenter, the clip at the end of the film was released, then the film surface (surface of the film on the side in contact with the casting drum) was subjected to corona discharge treatment in the atmosphere at a treatment intensity of 25 W·min/m$^2$, and the film having a film thickness of 4.5 $\mu$m was wound up into a film roll. Characteristics of the olefin multilayer film and capacitor characteristics of this example are as shown in Table 1. The film was very excellent in all of processing suitability in the production of a capacitor element, withstand voltage, and reliability.

(Examples 2 to 5)

Each olefin multilayer film was obtained in the same manner as in Example 1 except the temperature of the casting drum and the layer thickness ratio (Example 2), the temperature of the casting drum and the total thickness of the multilayer film (Examples 3 and 4), and the temperature of the casting drum (Example 5) were changed to the conditions shown in Table 1. Characteristics of the olefin multilayer film and capacitor characteristics of the examples are shown in Table 1. The film of Example 2 was excellent in processing suitability in the production of a capacitor element, but was inferior in both of withstand voltage and reliability. The film was at a level with no problem in practical use. The film of Example 3 was very excellent in all of processing suitability in the production of a capacitor element, withstand voltage, and reliability. The film of Example 4 was excellent in processing suitability in the production of a capacitor element and reliability, but was a little inferior in withstand voltage. The film was at a level with no problem in practical use. The film of Example 5 was at a level with no problem in practical use in all of processing suitability in the production of a capacitor element, withstand voltage, and reliability.

(Example 6)

An olefin multilayer film was obtained in the same manner as in Example 1 except that 100 parts by mass of a polypropylene resin manufactured by Prime Polymer Co., Ltd. having a meso-pentad fraction of 0.98, a melting point of 167°C, and a melt flow rate (MFR) of 2.6 g/10 min as a polypropylene resin for the layer A, and 0.25 parts by mass of silica particles having an average particle size of 0.1 $\mu$m manufactured by Tokuyama Corporation: SANSIL SSP-M01 were kneaded and extruded with an extruder set at 240°C, the resulting strands were cooled with water and made into chips to give a polypropylene resin raw material (A-1), the polypropylene resin raw material (A-1) was supplied to a single-screw melt extruder for the layer A, and the film was formed under the conditions shown in Table 1. Characteristics of the olefin multilayer film and capacitor characteristics of this example are as shown in Table 1. The film was very excellent in processing suitability in the production of a capacitor element and withstand voltage, but was inferior in reliability. The film was at a level with no problem in practical use.

(Example 7)

An olefin multilayer film was obtained in the same manner as in Example 1 except that 95 parts by mass of a polypropylene resin manufactured by Prime Polymer Co., Ltd. having a meso-pentad fraction of 0.98, a melting point of 167°C, and a melt flow rate (MFR) of 2.6 g/10 min as a polypropylene resin for the layer A was blended with 5 parts by mass of "TPX" (registered trademark) MX002 (a polymethylpentene resin having a melting point of 224°C) manufactured by Mitsui Chemicals, Inc., the blend was kneaded and extruded with an extruder set at 240°C, the resulting strands were cooled with water and made into chips to give a polypropylene resin raw material (A-2), the polypropylene resin raw material (A-2) was supplied to a single-screw melt extruder for the layer A, and the film was formed under the conditions shown in Table 1. Characteristics of the olefin multilayer film and capacitor characteristics of this example are as shown in Table 1. The film was very excellent in all of processing suitability in the production of a capacitor element, withstand voltage, and reliability.

(Example 8)

An olefin multilayer film was obtained in the same manner as in Example 1 except that as a COP instead of the COC for the cyclic olefin resin for the layer B, "ZEONOR" (registered trademark) 1420R (a cyclic olefin resin having a glass transition temperature of 135°C) manufactured by Zeon Corporation was used, and the film was formed under the conditions shown in Table 2. Characteristics of the olefin multilayer film and capacitor characteristics of this example are as shown in Table 2. The film was very excellent in all of processing suitability in the production of a capacitor element, withstand voltage, and reliability.

(Example 9)

An olefin multilayer film was obtained in the same manner as in Example 1 except that a polypropylene resin manufactured by Prime Polymer Co., Ltd. having a meso-pentad fraction of 0.94, a melting point of 161°C, and a melt flow rate (MFR) of 3.0 g/10 min was used as a polypropylene resin for the layer A, and the film was formed under the conditions shown in Table 2. Characteristics of the olefin multilayer film and capacitor characteristics of this example are as shown in Table 2. The film was very excellent in processing suitability in the production of a capacitor element, but was inferior in both of withstand voltage and reliability. The film was at a level with no problem in practical use.

(Comparative Example 1)

An olefin single-layer film was obtained in the same manner as in Example 1 except that the film had a single-layer structure of a polypropylene resin manufactured by Prime Polymer Co., Ltd. having a meso-pentad fraction of 0.98, a melting point of 167°C, and a melt flow rate (MFR) of 2.6 g/10 min, and the film was formed under the conditions shown in Table 2. Characteristics of the olefin single-layer film and capacitor characteristics of this comparative example are as shown in Table 2. The film was excellent in processing suitability in the production of a capacitor element, but was very poor in both of withstand voltage and reliability. The film was at a level with problem in practical use.

(Comparative Example 2)

Film formation was performed under the conditions shown in Table 2 in the same manner as in Example 1 except that the intended structure was a single-layer structure made from a mixture of 99.7 parts by mass of "TOPAS" (registered trademark) 6013F-04 (a resin obtained by copolymerizing ethylene with norbornene and having a glass transition temperature of 138°C) manufactured by POLYPLASTICS CO., LTD. as a COC as the cyclic olefin resin, and 0.3 parts by mass of IRGANOX 1010 manufactured by Ciba Specialty Chemicals as an antioxidant. No film was obtained as a result of frequent breakage.

(Comparative Example 3)

An olefin film was obtained in the same manner as in Example 1 except that the film was not subjected to heat treatment and relaxation treatment, and the film was formed under the conditions shown in Table 2. Characteristics of the olefin film and capacitor characteristics of this comparative example are as shown in Table 2. The film was very poor in processing suitability in the production of a capacitor element, a little insufficient in withstand voltage, and very poor in reliability. The film was at a level with problem in practical use.

(Comparative Example 4)

An unstretched film (thickness: 12 μm) having a three-layer structure of A/B/A was obtained in the same manner as in Example 1 except that the film was not subjected to biaxial stretching, heat treatment, and relaxation treatment. Characteristics of the olefin film and capacitor characteristics of this comparative example are as shown in Table 2. Peeling occurred between the layer A and the layer B at the measurement of the elongation at break, and measurement of the film as a multilayer film was impossible. As for the capacitor characteristics, the film was very poor in processing suitability in the production of a capacitor element, and was also very poor in both of withstand voltage and reliability. The film was at a level with problem in practical use.

[Table 1]

| | | | Example 1 | Example 2 | Example 3 | Example 4 | Example 5 | Example 6 | Example 7 |
|---|---|---|---|---|---|---|---|---|---|
| Layer structure | | – | A/B/A | A/B/A | A/B/A | A/B/A | A/B/A | A/B/A | A/B/A |
| Layer thickness ratio | | – | 1/1/1 | 2/1/2 | 1/1/1 | 1/1/1 | 1/1/1 | 1/1/1 | 1/1/1 |
| Total film thickness | | (μm) | 4.5 | 4.6 | 2.8 | 11.0 | 4.6 | 4.5 | 4.5 |
| layer A | Meso-pentad fraction | – | 0.98 | 0.98 | 0.98 | 0.98 | 0.98 | 0.98 | 0.98 |
| | Melting point of polypropylene resin | (°C) | 167 | 167 | 167 | 167 | 167 | 167 | 167 |
| | Presence or absence of particles and particle size | (μm) | Absent | Absent | Absent | Absent | Absent | Present 0.1 μm | Absent |
| layer B | Type of cyclic olefin resin | – | COC | COC | COC | COC | COC | COC | COC |
| Film forming conditions | Casting drum temperature | (°C) | 70 | 72 | 72 | 75 | 30 | 30 | 30 |
| | Longitudinal stretch ratio | times | 2.8 | 2.2 | 3.0 | 2.0 | 2.7 | 2.8 | 2.8 |
| | Transverse stretch ratio | times | 9.8 | 9.0 | 9.5 | 8.5 | 9.8 | 9.5 | 9.8 |
| | Heat treatment temperature | (°C) | 155 | 155 | 155 | 150 | 155 | 155 | 155 |
| | TD relaxation ratio | (%) | 10 | 10 | 10 | 10 | 10 | 10 | 10 |
| Film characteristics | Thermal shrinkage rate at 135°C | MD(%) | 0.7 | 1.8 | 0.8 | 0.8 | 0.7 | 1.0 | 0.7 |
| | | TD(%) | 0.0 | 0.6 | -0.1 | -0.1 | 0.1 | 0.1 | 0.0 |
| | Elongation at break | MD(%) | 121 | 142 | 133 | 152 | 126 | 115 | 122 |
| | | TD(%) | 45 | 68 | 52 | 52 | 52 | 28 | 41 |
| | Glossiness of film surface | Drum-side surface (%) | 126 | 125 | 138 | 113 | 150 | 148 | 130 |
| | | Reverse surface (%) | 127 | 125 | 136 | 118 | 149 | 149 | 133 |
| | Center line average roughness SRa of film surface | Drum-side surface (nm) | 71 | 72 | 62 | 93 | 15 | 26 | 62 |
| | | Reverse surface (nm) | 72 | 78 | 66 | 101 | 12 | 28 | 65 |
| | Ten-point average roughness SRz of film surface | Drum-side surface (nm) | 468 | 502 | 425 | 525 | 168 | 202 | 356 |
| | | Reverse surface (nm) | 555 | 663 | 516 | 721 | 161 | 205 | 455 |
| | Film dielectric breakdown voltage at 135°C | (V/μm) | 341 | 308 | 332 | 322 | 335 | 331 | 332 |
| | Volume resistivity of film at 135°C | (Ω·cm) | $5.5 \times 10^{14}$ | $1.2 \times 10^{14}$ | $5.2 \times 10^{14}$ | $3.6 \times 10^{14}$ | $6.1 \times 10^{14}$ | $3.2 \times 10^{14}$ | $7.2 \times 10^{14}$ |
| Processing suitability in production of capacitor element | | | A | A | A | A | B | A | A |
| Capacitor characteristics at 125°C | | Withstand voltage | A | B | A | B | B | A | A |
| | | Reliability | A | B | A | A | B | B | A |

\* MD: Film longitudinal direction
\* TD: Film width direction

[Table 2]

| | | | Example 8 | Example 9 | Comparative Example 1 | Comparative Example 2 | Comparative Example 3 | Comparative Example 4 |
|---|---|---|---|---|---|---|---|---|
| Layer structure | | – | A/B/A | A/B/A | Single layer of layer A | Single layer of layer B | A/B/A | A/B/A |
| Layer thickness ratio | | – | 1/1/1 | 1/1/1 | – | – | 1/1/1 | 1/1/1 |
| Total film thickness | | (μm) | 5.0 | 5.0 | 4.6 | 5.0 | 4.5 | 12 |
| layer A | Meso-pentad fraction | – | 0.98 | 0.94 | 0.98 | – | 0.98 | 0.98 |
| | Melting point of polypropylene resin | (°C) | 167 | 161 | 167 | – | 167 | 167 |
| | Presence or absence of particles and particle size | (μm) | Absent | Absent | Absent | – | Absent | Absent |
| layer B | Type of cyclic olefin resin | – | COP | COC | – | COC | COC | COC |
| Film forming conditions | Casting drum temperature | (°C) | 75 | 73 | 94 | 73 | 72 | 70 |
| | Longitudinal stretch ratio | times | 2.7 | 2.9 | 4.6 | 2.0 | 2.7 | – |
| | Transverse stretch ratio | times | 9.8 | 9.8 | 10.0 | 3.0 | 10.0 | – |
| | Heat treatment temperature | (°C) | 155 | 155 | 155 | 155 | – | – |
| | TD relaxation ratio | (%) | 10 | 10 | 10 | 10 | – | – |
| Film characteristics | Thermal shrinkage rate at 135°C | MD(%) | 0.7 | 2.0 | 4.5 | Broken during film formation | 8.7 | 0.1 |
| | | TD(%) | 0.1 | 0.8 | 2.8 | | 11.1 | 0.0 |
| | Elongation at break | MD(%) | 136 | 110 | 123 | | 95 | Peeled |
| | | TD(%) | 48 | 31 | 52 | | 18 | Peeled |
| | Glossiness of film surface | Drum-side surface (%) | 125 | 125 | 131 | | 122 | 106 |
| | | Reverse surface (%) | 127 | 127 | 133 | | 125 | 95 |
| | Center line average roughness SRa of film surface | Drum-side surface (nm) | 82 | 68 | 68 | | 68 | 101 |
| | | Reverse surface (nm) | 86 | 73 | 66 | | 63 | 260 |
| | Ten-point average roughness SRz of film surface | Drum-side surface (nm) | 489 | 488 | 425 | | 433 | 654 |
| | | Reverse surface (nm) | 532 | 516 | 411 | | 524 | 891 |
| | Film dielectric breakdown voltage at 135°C | (V/μm) | 338 | 301 | 255 | | 278 | 202 |
| | Volume resistivity of film at 135°C | (Ω·cm) | $5.8 \times 10^{14}$ | $2.1 \times 10^{14}$ | $5.5 \times 10^{13}$ | | $8.1 \times 10^{13}$ | $6.1 \times 10^{12}$ |
| Processing suitability in production of capacitor element | | | A | A | A | | D | D |
| Capacitor characteristics at 125°C | | Withstand voltage | A | B | D | | C | D |
| | | Reliability | A | B | D | | D | D |

\* MD: Film longitudinal direction
\* TD: Film width direction

DESCRIPTION OF REFERENCE SIGNS

E:    Power supply
A:    Ammeter
X:    Sample
a:    Main electrode
b:    Counter electrode
c:    Guard electrode

**Claims**

1.  An olefin multilayer biaxially stretched film, comprising a base layer unit containing a cyclic olefin resin, and a constituent layer containing a polypropylene resin laminated on both surfaces of the base layer unit, having a dielectric breakdown voltage at 135°C, measured in accordance with JIS C 2330 (2001) as described in the specification of 280 V/$\mu$m or more, wherein
    the polypropylene resin has a meso-pentad fraction of 0.95 or more and a melting point higher than 160°C, and wherein
    the thickness of the film is in the range of 0.5 $\mu$m or more and less than 15 $\mu$m.

2.  The olefin multilayer biaxially stretched film according to claim 1, having an elongation at break of 20% or more in both a longitudinal direction and a width direction of the film.

3.  The olefin multilayer biaxially stretched film according to claim 1 or 2, having a thermal shrinkage rate at 135°C of 2% or less in both a longitudinal direction and a width direction of the film.

4.  The olefin multilayer biaxially stretched film according to any one of claims 1 to 3, wherein both surfaces of the olefin multilayer film have a center line average roughness SRa of 20 nm or more and a ten-point average roughness SRz of 200 nm or more.

5.  The olefin multilayer biaxially stretched film according to any one of claims 1 to 4, wherein both surfaces of the film have a glossiness of 110% or more and less than 145%.

6.  The olefin multilayer biaxially stretched film according to any one of claims 1 to 5, having a volume resistivity at 135°C of $1 \times 10^{14}$ $\Omega$·cm or more.

7.  A method for producing the olefin multilayer biaxially stretched film according to any one of claims 1 to 6, including a step of lamination through coextrusion.

8.  A method for producing the olefin multilayer biaxially stretched film according to any one of claims 1 to 6, including a step of lamination and subsequent biaxial stretching.

9.  A metal membrane multilayer biaxially stretched film, comprising the olefin multilayer biaxially stretched film according to any one of claims 1 to 6, and a metal membrane provided on at least one surface of the olefin multilayer biaxially stretched film.

10. A film capacitor, comprising the metal membrane multilayer biaxially stretched film according to claim 9.

**Patentansprüche**

1.  Biaxial gestreckter Olefin-Mehrschichtfilm, umfassend eine Basisschichteinheit, die ein cyclisches Olefinharz enthält, und eine Bestandteilschicht, die ein auf beide Oberflächen der Basisschichteinheit laminiertes Polypropylenharz enthält, mit einer dielektrischen Durchschlagspannung bei 135 °C von 280 V/$\mu$m oder mehr, gemessen gemäß JIS C 2330 (2001), wie in der Spezifikation beschrieben, wobei das Polypropylenharz eine Mesopentadenfraktion von 0,95 oder mehr und einen Schmelzpunkt von mehr als 160 °C hat, und wobei die Dicke des Films im Bereich von

0,5 μm oder mehr und weniger als 15 μm liegt.

2. Biaxial gestreckter Olefin-Mehrschichtfilm nach Anspruch 1 mit einer Reißdehnung von 20% oder mehr sowohl in Längsrichtung als auch in Breitenrichtung des Films.

3. Biaxial gestreckter Olefin-Mehrschichtfilm nach Anspruch 1 oder 2 mit einer Wärmeschrumpfungsrate bei 135 °C von 2% oder weniger sowohl in Längsrichtung als auch in Breitenrichtung des Films.

4. Biaxial gestreckter Olefin-Mehrschichtfilm nach einem der Ansprüche 1 bis 3, wobei beide Oberflächen des Olefin-Mehrschichtfilms eine mittlere Mittellinien-Rauheit SRa von 20 nm oder mehr und eine mittlere Zehnpunkt-Rauheit SRz von 200 nm oder mehr haben.

5. Biaxial gestreckter Olefin-Mehrschichtfilm nach einem der Ansprüche 1 bis 4, wobei beide Oberflächen des Films einen Glanz von 110% oder mehr und weniger als 145% haben.

6. Biaxial gestreckter Olefin-Mehrschichtfilm nach einem der Ansprüche 1 bis 5, mit einem spezifischen Volumenwiderstand bei 135 °C von $1 \times 10^{14}$ Ω·cm oder mehr.

7. Verfahren zur Herstellung des biaxial gestreckten Olefin-Mehrschichtfilms nach einem der Ansprüche 1 bis 6, umfassend einen Laminierungsschritt durch Coextrusion.

8. Verfahren zur Herstellung des biaxial gestreckten Olefin-Mehrschichtfilms nach einem der Ansprüche 1 bis 6, umfassend einen Laminierungsschritt und anschließendes biaxiales Strecken.

9. Biaxial gestreckter Metallmembran-Mehrschichtfilm, der den biaxial gestreckten Olefin-Mehrschichtfilm nach einem der Ansprüche 1 bis 6 und eine Metallmembran aufweist, die auf mindestens einer Oberfläche des biaxial gestreckten Olefin-Mehrschichtfilms vorgesehen ist.

10. Filmkondensator, der den biaxial gestreckten Metallmembran-Mehrschichtfilm nach Anspruch 9 aufweist.

**Revendications**

1. Film oléfinique multicouche étiré de manière biaxiale, comprenant une unité de couche de base contenant une résine d'oléfine cyclique et une couche constitutive contenant une résine de polypropylène stratifiée sur les deux surfaces de l'unité de couche de base, ayant une tension diélectrique disruptive à 135°C, mesurée conformément à la norme JIS C 2330 (2001) telle que décrite dans la description de 280 V/μm ou plus, dans lequel la résine de polypropylène a une fraction de mésopentade de 0,95 ou plus et un point de fusion supérieur à 160°C, et dans lequel l'épaisseur du film est comprise dans la plage allant de 0,5 μm ou plus à 15 μm ou moins.

2. Film oléfinique multicouche étiré de manière biaxiale selon la revendication 1, ayant un allongement à la rupture de 20% ou plus à la fois dans une direction longitudinale et une direction de la largeur du film.

3. Film oléfinique multicouche étiré de manière biaxiale selon la revendication 1 ou 2, ayant un taux de retrait thermique à 135°C de 2% ou moins à la fois dans une direction longitudinale et une direction de la largeur du film.

4. Film oléfinique multicouche étiré de manière biaxiale selon l'une quelconque des revendications 1 à 3, dans lequel les deux surfaces du film multicouche oléfinique ont une rugosité moyenne de ligne centrale SRa de 20 nm ou plus et une rugosité moyenne en dix points SRz de 200 nm ou plus.

5. Film oléfinique multicouche étiré de manière biaxiale selon l'une quelconque des revendications 1 à 4, dans lequel les deux surfaces du film ont une brillance de 110% ou plus et moins de 145%.

6. Film oléfinique multicouche étiré de manière biaxiale selon l'une quelconque des revendications 1 à 5, ayant une résistivité en volume à 135°C de $1 \times 10^{14}$ Ω·cm ou plus.

7. Procédé de production du film oléfinique multicouche étiré de manière biaxiale selon l'une quelconque des revendications 1 à 6, comportant une étape de stratification par coextrusion.

8. Procédé de production du film oléfinique multicouche étiré de manière biaxiale selon l'une quelconque des revendications 1 à 6, comportant une étape de stratification et d'étirage biaxial subséquent.

9. Film multicouche étiré de manière biaxiale à membrane métallique, comprenant le film oléfinique multicouche étiré de manière biaxiale selon l'une quelconque des revendications 1 à 6, et une membrane métallique prévue sur au moins une surface du film oléfinique multicouche étiré de manière biaxiale.

10. Condensateur à film, comprenant le film multicouche étiré de manière biaxiale à membrane métallique selon la revendication 9.

Figure 1

E: Power supply
A: Ammeter
X: Sample
a: Main electrode
b: Counter electrode
c: Guard electrode

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015012076 A

- JP 6336526 A

**Non-patent literature cited in the description**

- *Nikkei Electronics,* 17 September 2012, 57-62